# EUROPÄISCHE PATENTSCHRIFT

(11) **EP 0 722 809 B1**
(45) Veröffentlichungstag und Bekanntmachung des Hinweises auf die Patenterteilung: **20.02.2002**
(21) Anmeldenummer: 95117741.9
(22) Anmeldetag: 10.11.1995
(51) Int. Cl.: B23Q 16/08

(54) **Kupplungsvorrichtung**
Coupling device
Dispositif d'accouplement

(30) Priorität: 13.12.1994 DE 4444241
(43) Veröffentlichungstag der Anmeldung: 24.07.1996
(73) Patentinhaber: System 3 R International AB, 162 26 Vällingby (SE)
(72) Erfinder: Nordquist, Bengt Hakan, S-183 43 Taeby (SE)
(74) Vertreter: Zinngrebe, Horst, Dr.rer.nat.

(56) Entgegenhaltungen:
- EP-A- 0 267 352
- DE-A- 1 477 140
- DE-A- 3 003 756
- DE-B- 2 646 951
- DE-B- 2 725 655
- DE-C- 285 975
- DE-U- 9 203 992

## Beschreibung

Die Erfindung betrifft eine Spannvorrichtung bestehend aus zwei Kupplungsteilen und Spannmitteln zum lösbaren axialen Zusammenspannen der beiden Kupplungsteile, von denen eines mehrere Anlageelemente und das andere Kupplungsteil mehrere Gegenelemente aufweist, wobei beim Zusammenspannen die Anlageelemente zur eindeutigen Positionierung in Umfangsrichtung zur Anlage an die Gegenelemente gelangen, und wobei die Kupplungsteile zusammenwirkende, sich quer zur Spannrichtung erstreckende Referenzflächen zur axialen Positionierung aufweisen.

Diese aus der deutschen Offenlegungsschrift 30 03 756 bekannte Vorrichtung dient zum Halten von Elektroden für Erodiermaschinen, wobei das mit den Anlageelementen ausgerüstete Kupplungsteil an der Maschine befestigt ist. Die Anlageelemente bestehen aus drei axial vorstehenden konischen Zapfen, welche beim Zusammenspannen der beiden Kupplungsteile in konisch geformte Nuten als Gegenelemente am anderen Kupplungsteil eingreifen. Die dadurch gegebene Zusammenfassung der Ausrichtung des beweglichen Kupplungsteils zu dem festen Kupplungsteil in der mit der Spannrichtung zusammenfallenden z-Richtung sowie in der dazu senkrechten Ebene (Umfangsrichtung) hat den Nachteil, daß bei Verlust der Genauigkeit in der Ausrichtung beispielsweise in der genannten Ebene durch Ungenauigkeiten an den Kupplungsteilen oder durch Abnutzung nach längerer Benutzung gleichzeitig die genaue Ausrichtung in der z-Richtung verloren geht.

Aus der veröffentlichten europäischen Patentanmeldung 111 092 ist eine Spannvorrichtung bekannt, bei der zwischen die beiden Kupplungsteile eine axial elastische Mitnehmerscheibe zwischengelegt ist. Die Mitnehmerscheibe ist mit Abstand an demjenigen Kupplungsteil befestigt, welches entweder selbst ein Werkstück ist oder als Werkstückträger dient. Das andere Kupplungsteil ist integraler Bestandteil des Bearbeitungskopfes einer Werkzeugmaschine, die meist eine Senkerodiermaschine ist, und weist Leisten auf, die beim Zusammenspannen in Ausschnitte der Mitnehmerscheibe eingreifen. Das Werkstück wird außerhalb der Werkzeugmaschine einer Bearbeitung in der Weise unterzogen, daß es nach Anspannen an die Werkzeugmaschine als Werkzeug, beispielsweise als eine Elektrode zum Erodieren dienen kann.

Hierbei tritt das Problem auf, daß sich im Zwischenraum zwischen der Mitnehmerscheibe und dem zugehörigen Kupplungsteil bei der Bearbeitung des Werkstücks anfallende Späne oder dergleichen Abriebteile ansammeln und die freie elastische Nachgiebigkeit der Mitnehmerscheibe beim Zusammenspannen der beiden Kupplungsteile beeinträchtigen können.

Aus der europäischen Patentschrift 255 042 ist eine Spannvorrichtung bekannt, bei der das mit Leisten versehene Kupplungsteil ebenfalls in den Bearbeitungskopf einer Werkzeugmaschine, vornehmlich einer Senkerodiermaschine integriert ist. Axialelastische Elemente sind als Lippenpaare an dem als Werkstückträger dienenden anderen Kupplungsteil ausgebildet, wobei beim Zusammenspannen des Werkstückträgers mit dem Bearbeitungskopf der Werkzeugmaschine die Leisten zwischen die Kanten eines Lippenpaares eindringen. Wegen der außerordentlich hohen Genauigkeit der winkelmäßigen Positionierung des Werkstückhalters beim wiederholten Anspannen an die Werkzeugmaschine, die trotz der zwischen den einzelnen Spannvorgängen erfolgenden mechanischen Bearbeitung des Werkstückes sichergestellt bleiben muß, erfordert das Herausarbeiten der Lippen aus dem zugehörigen Kupplungsteil einen erheblichen fertigungstechnischen Aufwand. Der Werkstückträger wird jedoch in hohen Stückzahlen benötigt, weil beispielsweise beim erosiven Bearbeiten eines Werkstücks eine große Zahl von Bearbeitungselektroden erforderlich ist.

Das Dokument DE-B-2646951 zeigt eine Spannvorrichtung zum lösbaren Zusammenspannen zweier Kupplungsteile, von denen eines ein Anlageelement und das andere Kupplungsteil mehrere Gegenelemente aufweist, wobei beim Zusammenspannen Gegenelement mit Anlageelement zusammenwirkt und die Kupplungsteile in Umfangsrichtung eindeutig positioniert, und wobei die Anlageelement und die Gegenelemente beim Zusammenspannen von einer in Umfangsrichtung wirkenden Kraft derart beaufschlagt werden, daß Gegenelement an Anlageelement zur Anlage gelangt.

In der Schrift DE 92 03 992 U wird eine Vorrichtung zum Ankuppeln eines Werkstückes oder Werkzeuges an einer Werkzeugmaschine beschrieben, bei welcher zur Positionierung zweier Kupplungsteile in Umfangsrichtung Zentrierrollen in Nuten eingedrückt werden, deren Flanken seitlich nachgiebig sind.

Der Erfindung liegt die Aufgabe zugrunde, die eingangs genannte Spannvorrichtung derart auszubilden, daß das als Elektroden- oder Werkstückträger dienende Kupplungsteil mit wesentlich geringerem Aufwand herstellbar ist.

Diese Aufgabe wird durch die kennzeichnenden Merkmale des Anspruchs 1 gelöst.

Dazu ist erfindungsgemäß vorgesehen, daß die Anlageelemente oder die Gegenelemente mit beim Zusammenspannen eine in Umfangsrichtung wirkende Kraft entwickelnden Mitteln gekoppelt sind. Damit wird erreicht, daß das die Gegenelemente aufweisende Kupplungsteil wesentlich einfacher hergestellt werden kann. Darüber hinaus treten hierbei keine besonderen Schmutzprobleme auf, weil das als Werkstückträger verwendbare Kupplungsteil keine komplizierten Nischen aufweist, in denen sich Späne oder sonstige Abriebteile des Werkstücks ansammeln können.

In bevorzugter Ausgestaltung der Erfindung kann entweder bei jedem Anlageelement die zu dem jeweils zugehörigen Gegenelement die dem jeweils zugehörigen Anlageelement benachbarte Gegenfläche jeweils schwach ballig ausgeführt sein. Dadurch wird eine im wesentlichen punktförmige Anlage der Gegenelemente an die Anlageelemente beim Zuammenspannen in Umfangsrichtung geschaffen, die eine allfällige Anfälligkeit der Ausrichtung gegen Schmutz und dergleichen. Partikel weiter reduziert.

In besonders einfacher Ausführung der Erfindung kann vorgesehen sein, daß an dem die Anlageelemente tragenden Kupplungsteil wenigstens ein Andruckelement ausgebildet ist, das beim Zusammenspannen das andere Kupplungsteil mit der Kraft beaufschlagt.

In weiterer bevorzugter Ausgestaltung der Erfindung sind zweckmäßig elastische Andruckelemente vorgesehen, von denen beim Zusammenspannen je eines je ein Gegenelement gegen ein Anlageelement beaufschlagt. Die Andruckelemente, die zweckmäßig an dem mit der Maschine verbindbaren Kupplungsteil vorgesehen sind, erfüllen selbst keine Ausrichtfunktion, sondern dienen zum Gegendrücken der Gegenelemente gegen die Anlageelemente sowie zum erleichterten Entspannen der Kupplungsteile nach Lösen der Spannmittel.

Die Erfindung gestattet weitere, besonders zweckmäßige Ausführungsformen. So können die Gegenelemente als sich axial erhebende und sich von der Peripherie des Kupplungsteils nach innen, zweckmäßig radial erstreckende Leisten ausgebildet sein, wobei jede Leiste zweckmäßig wenigstens eine Keilfläche aufweist. Als Einführhilfe für das Anspannen des beweglichen Kupplungsteils an das mit der Maschine befestigte Kupplungsteil kann eine am beweglichen Kupplungsteil mittig angeordnete, kegelstumpfförmige Erhebung dienen, die in eine mittige Aussparung im mit der Maschine befestigten Kupplungsteil eingeführt werden kann.

Ferner empfiehlt es sich, die Anlageelemente als freie, sich von der Periphierie nach innen erstreckende, festen Kanten auszubilden. Weiterhin ist vorteilhaft, an dem die Anlageelemente tragenden Kupplungsteil in Umfangsrichtung neben jedem Anlageelement je eine axialelastische Lippe derart auszubilden, daß beim Zusammenspannen je ein Gegenelement in einen zwischen der Lippe und dem benachbarten Anlageelement verbleibenden Schlitz eindringt. Schließlich ist es zweckmäßig, wenn jedes Gegenelement zwei gegenüberliegende parallele Keilflächen besitzt und die Kanten jedes Anlageelements sowie jeder benachbarten Lippe parallel sind. Die Referenzflächen sind vorteilhafterweise auf Sätteln ausgebildet, die sich aus wenigstens einem der Kupplungsteile axial um eine Höhe erheben, die kleiner als die Höhe der Leisten ist. Für kleine, mit dem beweglichen Kupplungsteil verbundene Werkzeuge oder Elektroden reicht es aus, wenn in Weiterbildung der Erfindung an dem an der Werkzeugmaschine befestigbaren Kupplungsteil drei Anlageelemente vorgesehen sind, die in Umfangsrichtung zweckmäßig gleich beabstandet sind. Die Referenzflächen können in Umfangsrichtung zwischen je zwei Anlageelementen und je zwei Gegenelementen vorgesehen sein. Haben die Kupplungsteile runde Außenkontur, können die Lippen bogenförmig ausgebildet sein. Zweckmäßig liegen die Lippen und die Anlageelemente in einer gemeinsamen Ebene.

Die Kupplungsteile lassen sich besonders leicht an Werkstückabmessungen anpassen, die im Verhältnis zu einer an der Werkzeugmaschine vorgesehenen Kupplung relativ klein sind, wenn in Weiterbildung der Erfindung das an der Werkzeugmaschine befestigbare Kupplungsteil an der den Anlageelementen gegenüberliegenden Seite mit axial elastischen Elementen versehen ist, die bei seiner lösbaren Befestigung an der Werkzeugmaschine mit an dieser vorgesehenen Leisten zusammenwirken. Dann kann das an der Werkzeugmaschine befestigbare Kupplungsteil an seiner die Anlageelemente tragenden Seite wesentlich kleinere radiale Ausdehnung haben als an der mit den Elementen versehenen Seite.

Die Erfindung wird nachstehend anhand der in der beigefügten Zeichnung dargestellten Ausführungsbeispiele im einzelnen beschrieben. Es zeigen:
- Fig. 1: eine schematische perspektivische Darstellung eines ersten mit einer Werkzeugmaschine verbindbaren Kupplungsteils;
- Fig. 2: eine perspektivische Ansicht eines zweiten, auf die Darstellung in Fig. 1 axial im wesentlichen ausgerichteten, mit einem Elektrodenrohling verbundenen Kupplungsteils;
- Fig. 3: eine Ansicht des ersten Kupplungsteils gemäß Fig. 1 von unten;
- Fig. 4: eine Seitenansicht des zweiten Kupplungsteils nach Fig. 2;
- Fig. 5: eine Ansicht des ersten Kupplungsteils von unten nach einer anderen Ausführungsform der Erfindung;
- Fig. 6: eine Ansicht auf das zweite Kupplungsteil gemäß der weiteren Ausführungsform der Erfindung;
- Fig. 7: eine weitere Ausführungsform der Erfindung anhand zweier mit einem Bolzen zusammenspannbarer Kupplungsteile; und
- Fig. 8: die in Fig. 7 dargestellte Ausführungsform der Erfindung während des Zusammenspannens der Kupplungsteile.

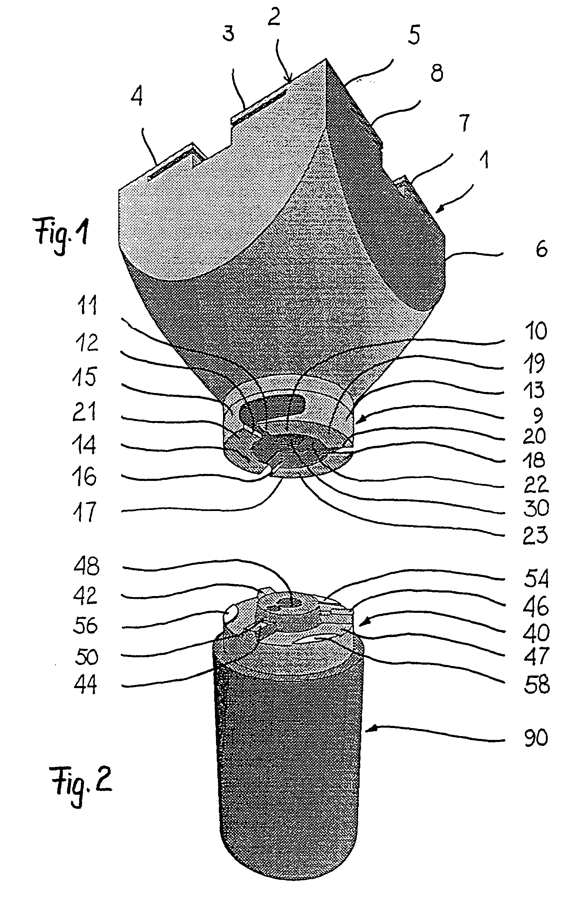

Der im Ganzen mit 1 bezeichnete Kupplungsträger ist dazu bestimmt, durch Anspannen mit dem Bearbeitungskopf einer nicht dargestellten Senkerodiermaschine lösbar befestigt zu werden. Dazu weist die freie Stirnfläche des Bearbeitungskopfes der exakten Positionierung des Kupplungsträgers 1 dienende Pfosten und Leisten auf, wie sie beispielsweise in der europäischen Patentschrift 255 042 im einzelnen beschrieben sind. Die Oberseite 2 des Kupplungsträgers 1 ist dazu, wie in dem genannten Dokument erläutert, mit vier Paaren von kreuzweise angelegten Lippen versehen, in die die entsprechend kreuzweise am Bearbeitungskopf angeordneten Leisten beim Anspannen des Kupplungsträgers 1 dieses positionierend eingreifen. In Fig. 1 sind die zu einem ersten Lippenpaar gehörende Lippen 3, 4 sowie die zu einem zweiten Lippenpaar gehörenden Lippen 7, 8 zu erkennen. Die zwischen den Lippenpaaren verbleibenden Oberseitenbereiche, beispielsweise der Bereich 5 des Kupplungsträgers 1 dienen dabei als Referenzflächen für die Positionierung des Kupplungsträgers 1 in z-Richtung, die mit der Achse 24 des Kupplungsträgers 1 zusammenfällt.

Der Kupplungsträger 1, der im oberen Abschnitt 6 in Draufsicht quadratischen Querschnitt hat, verjüngt sich in seinem anschließenden unteren Abschnitt konisch bis zu einem im Außenumfang im wesentlichen zylindrischen ersten Kupplungsteil 9, der demzufolge einen Durchmesser hat, der wesentlich kleiner als die Länge einer Seitenkante des Kupplungsträgers 1 im oberen Abschnitt 6 ist.

Aus dem Material des ersten Kupplungsteils 9 sind drei Lippen 10, 14, 18 herausgeschnitten. Jede Lippe 10, 14, 18 erstreckt sich kreisbogenförmig an die Peripherie des Kupplungsteils 9 angrenzend, ist durch einen tiefen Hinterschnitt axialelastisch, liegt mit den anderen Lippen in einer gemeinsamen freien Stirnfläche des Kupplungsteils 9 und endet radial einwärts an einer tiefen mittigen kreisrunden axialen Ausnehmung 22 aus der Stirnfläche. Jede Lippe 10, 14, 18 endet mit einer freien radiusparallelen Kante, die für die Lippe 10 mit 11 bezeichnet ist.

Von dem ersten Kupplungsteil 9 bleiben somit drei massive Reststücke oder Blöcke 13, 15, 17 übrig, die axial in der gemeinsamen Ebene mit den Lippen 10, 14, 18 enden. An jedem Block 13, 15, 17 ist in einer Umfangsrichtung (in Fig. 1 im Gegensinn des Uhrzeigers) eine Lippe 10, 14, 18 und in der entgegengesetzten Umfangsrichtung (im Uhrzeigersinn) eine freie feste hier radiusparallele Kante 20, 12, 16 als Anlageelement ausgebildet. Somit bleiben zwischen der an einem Block 13, 15, 17 ausgebildeten Lippe 10, 14, 18 und festen Kante 20, 12, 16 ein Flächenabschnitt 19, 21, 23, der als Referenzfläche für die z-Richtung beim Zusammenspannen des ersten Kupplungsteils mit einem zweiten Kupplungsteil 40 dient.

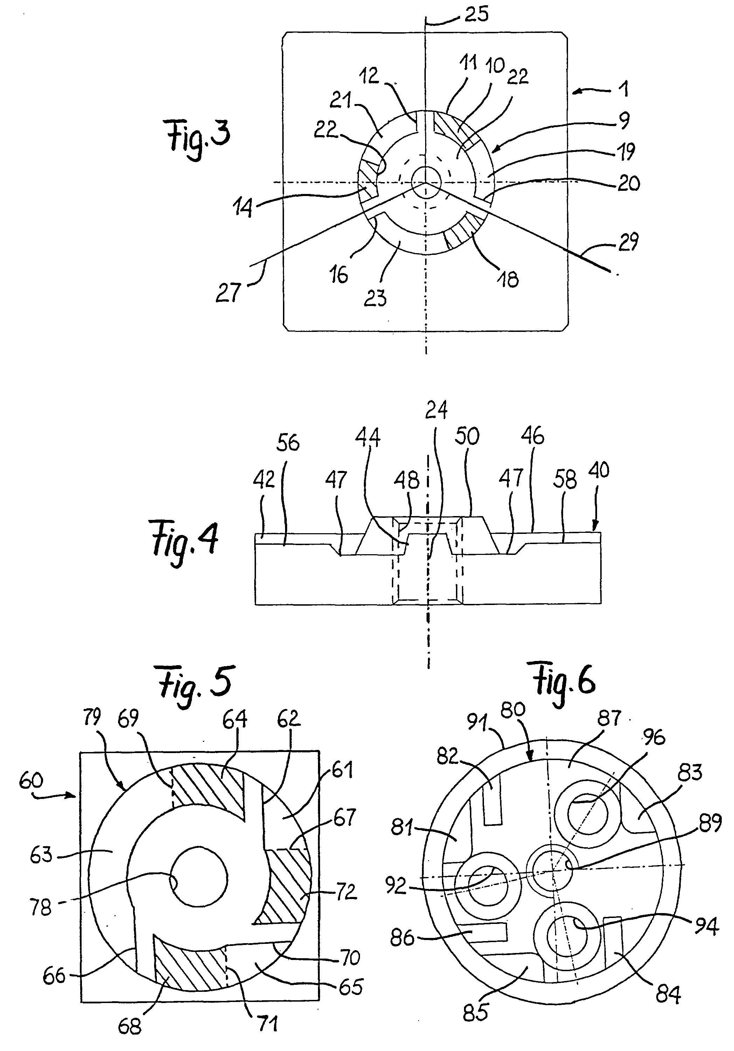

Auf diese Weise entsteht zwischen jeder Lippe 10, 14, 18 und der benachbarten festen Kante 12, 16, 20 ein Schlitz zum Eindringen eines noch zu beschreibenden Gegenelementes am zweiten Kupplungsteil 40 während des Spannvorgangs. Alle Schlitze sind gleich breit. In Fig. 3 ist die durch jeden Schlitz gelegte Mittellinie mit 25, 27, 29 bezeichnet und jede Lippe ist schraffiert angedeutet. In der dargestellten Ausführungsform der Erfindung erstrecken sich die Mittellinien 25, 27, 29 längs Radien und je zwei Mittellinien schließen einen Winkel von 120° ein.

Es liegt jedoch auch im Rahmen der Erfindung, die Schlitze in Umfangsrichtung nicht gleich zu beabstanden, so daß beispielsweise die Mittellinien 25 und 27 sowie 25 und 29 je einen Umfangswinkel von 115° und die Mittellinien 27 und 29 einen Umfangswinkel von 130° einschließen.

Das zweite Kupplungsteil 40 ist auf der oberen Stirnfläche eines Elektrodenrohlings 90 mittig befestigt. Aus der Oberseite 47 des zweiten Kupplungsteils 40 stehen drei in Umfangsrichtung beabstandete Leisten 42, 44, 46 axial vor, von denen jede aus einem mittleren, ein zentrales Loch 48 umschließenden, erhabenen Ring 50 ausgehend sich nach radial außen erstreckt und zwei gegenüberliegende, radiusparallele Keilflächen besitzt. Die Breite jeder der Leisten 42, 44, 46 ist an ihrer Oberseite kleiner und an ihrer in den Korpus des zweiten Kupplungsteils 40 übergehenden Basis größer als die Weite jedes der Schlitze zwischen je einer Lippe 10, 14, 18 und der benachbarent festen Kante 12, 16, 20. Da alle Schlitze gleiche Breite haben, sind auch die Außenkonturen aller Leisten 42, 44, 46 gleich. Die Keilflächen an jeder der Leisten 42, 44, 46 sind ausgebildet, daß beim Zusammenspannen der Kupplungsteile 9 und 40 die Keilflächen jeder Leiste 42, 44, 46 in jeweils einen der Schlitze zwischen der freien Kante einer Lippe und der benachbarten festen Kante eindringen können.

In Umfangsrichtung sind zwischen je zwei Leisten an der Peripherie des zweiten Kupplungsteils 40 Referenzflächen 54, 56, 58 ausgebildet, die über der Oberseite 47 auf einer Höhe sich quer zur Achse 24 erstrecken, die kleiner ist als die Höhe jeder der Leisten 42, 44, 46. Die Referenzgegenflächen sind dazu bestimmt, mit einer der Referenzflächen 19, 21, 23 am ersten Kupplungsteil 9 beim Zusammenspannen zwecks Ausrichtung in z-Richtung anzuliegen.

Es versteht sich, daß die Leisten 42, 44, 46, in Umfangsrichtung die gleichen Winkel einschließen wie die erwähnten Mittellinien 25, 27, 29.

Zum Anspannen des zweiten Kupplungsteils 40 mit oder ohne Elektrodenrohling 90 an das erste Kupplungsteil 9 durchgreift ein nicht dargestellter Zugbolzen den Kupplungsträger 1 durch dessen Zentralbohrung 30 und wird in das beispielsweise mit einem Innengewinde versehene Loch 48 eingeschraubt. Der sich aus dem Kupplungsträger 1 nach oben erstreckende Zugbolzen wird in eine im Bearbeitungskopf der Werkzeugmaschine vorhandene und in dem Dokument EP-A-255 042 beschriebene Spanneinrichtung eingesetzt, die durch Beaufschlagung beispielsweise mit Druckluft den Zugbolzen axial hochzieht und damit nicht nur den Kupplungsträger 1 am Bearbeitungskopf, sondern auch das zweite Kupplungsteil 40 am ersten Kupplungsteil 9 anspannt, wobei die Leisten 42, 44, 46 in die Schlitze eindringen und mit einer ihrer Keilflächen gegen die festen Kanten 12, 16, 20 zur Anlage kommen, gegen welche sie durch die zugehörige Lippe 10, 14, 18, gepreßt werden. Die Leisten 42, 44, 46 dringen soweit in die Schlitze ein, bis die Referenzgegenflächen 54, 56, 58 an den jeweils zugehörigen Referenzflächen 19, 21, 23 am ersten Kupplungsteil 9 zur Anlage gelangen. Das zweite Kupplungsteil 40 ist dann sowohl in der in Spannrichtung weisenden z-Richtung wie auch in Umfangsrichtung eindeutig positioniert, wobei die Positionierung in Umfangsrichtung durch Anlage einer der Keilflächen der Leisten an die zugehörige feste Kante unter dem Anpreßdruck der benachbarten Lippe erfolgt.

Als Einführhilfe für die Leisten in die Schlitze dient der zentrale Ring 50, der sich höher über die Oberseite 47 als die Leisten erhebt und kegelstumpfförmige Form hat. Der Außendurchmesser des Rings 50 ist so bemessen, daß er in die Einsenkung 22 ohne Behinderung eintauchen kann.

Durch Wegnahme der Druckluftbeaufschlagung der Spannmittel in der Spanneinrichtung kann das zweite Kupplungsteil 40 vom ersten Kupplungsteil 9 durch Abziehen entgegen der Spannrichtung gelöst werden, wobei dieses Lösen durch die Entspannung der Lippen 10, 14, 18 unterstützt wird.

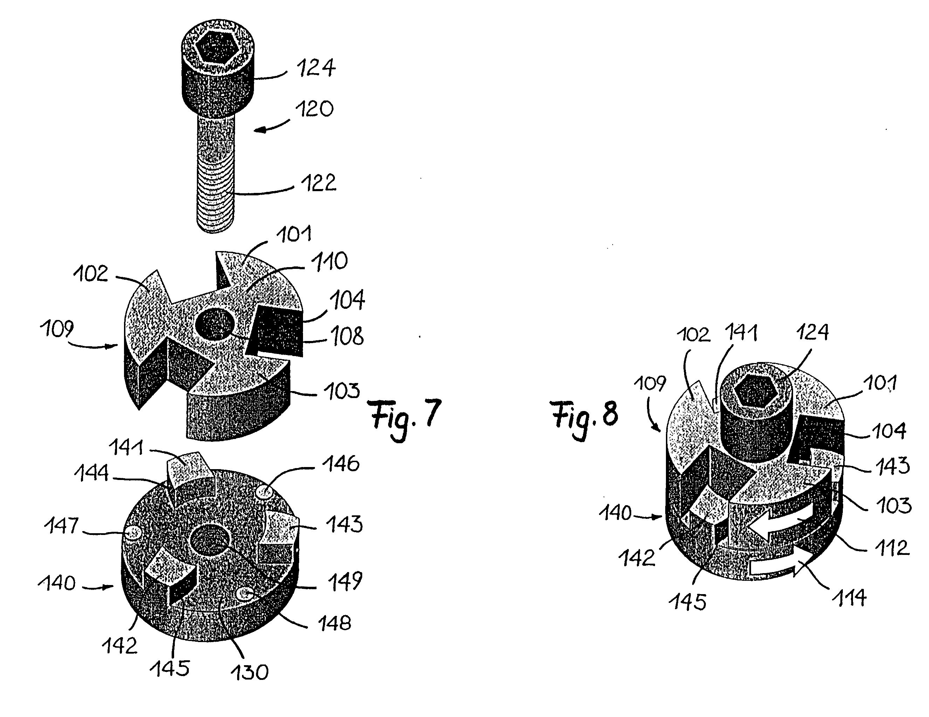

Bei der in Fig. 5 dargestellten weiteren Ausführungsform eines Kupplungsträgers 60 sind an der freien Stirnfläche des unteren, einen zylindrischen Umfang aufweisenden ersten Kupplungsteil 79 wie beim vorstehend beschriebenen Ausführungsbeispiel der Erfindung feste Kanten 62, 66, 70 ausgebildet, die hier jedoch parallel zu einer Sekante des Umfangskreises des Kupplungsteils 79 verlaufen und im wesentlichen rechtwinklig zueinander in einer durch drei Schlitze unterbrochenen Ringfläche liegen. Jeder festen Kante 62, 66, 70 unmittelbar benachbart befindet sich die freie Kante einer axialelastischen Lippe 64, 68, 72. Die axialelastischen Lippen 64, 68, 72 sind wieder durch Hinterschnitte aus dem Material des Kupplungsbereichs 69 erzeugt. Auf der Ringfläche bleiben axial feste Referenzflächen 61, 63, 65, die von der jeweils benachbarten festen Kante 62, 66, 70 bis zu dem gestrichelt bei 67, 69, 71 angedeuteten Beginn der Lippe 72, 64, 68 reichen. Die Referenzflächen 61, 63, 65 liegen selbstverständlich in einer zur Achse des Kupplungsträgers 60 senkrechten Ebene.

Das zu dem ersten Kupplungsteil 79 gehörende zweite Kupplungsteil 80 gemäß Fig. 6, welches hier auf der Stirnfläche eines zylindrischen Elektrodenrohlings 91 befestigt ist, weist zunächst Referenzgegenflächen 81, 83, 85 auf, die beim Zusammenspannen der beiden Kupplungsteile 79 und 80 auf den Referenzflächen 61, 63, 65 des ersten Kupplungsteils 79 zur Anlage kommen. Die Referenzgegenflächen 81, 83, 85 sind wieder auf Sätteln ausgebildet, die sich aus der Oberseite 87 des zweiten Kupplungsteils 80 erheben.

Ferner stehen aus der Oberseite 87 drei Leisten 82, 84, 86 vor, die in nicht dargestellter Weise mit seitlichen Keilflächen versehen sind und sich sekantenparallel sowie rechtwinklig zueinander und von der Außenperipherie des zweiten Kupplungsteils 80 ausgehend nach innen erstrecken. Ersichtlich greifen beim Zusammenspannen des zweiten Kupplungsteils 80 mit dem ersten Kupplungsteil 79 die Leisten 82, 84, 86 in die Schlitze zwischen der festen Kante 62 und der Lippe 64, der festen Kante 66 und der Lippe 68 sowie der festen Kante 70 und der Lippe 72 ein.

Man erkennt ferner aus Fig. 5 und 6, daß sowohl die Schlitze wie auch die zugehörigen Leisten in Umfangsrichtung unterschiedlichen Winkelabstand besitzen, so daß die beiden Kupplungsteile 79 und 80 nur in einer bestimmten Orientierung zueinander zusammen gespannt werden können.

In die Oberseite 87 des zweiten Kupplungsteils 80 sind neben den Referenzgegenflächen 81, 83, 85 und den Leisten 82, 84, 86 Bohrungen 92, 94, 96 eingebracht, in welche Gewindeschrauben mit Senkkopf zur Befestigung des Elektrodenrohlings 91 eingesetzt werden können.

Schließlich besitzt das zweite Kupplungsteil 80 eine mittige Gewindebohrung 89, in welche das Außengewinde eines die Zentralbohrung 78 des ersten Kupplungsteils 79 sowie des Kupplungsträgers 60 durchdringenden Zugankers für die Spannmittel eingreifen kann.

Die Ausführungsform der Erfindung gemäß Figuren 7 und 8 zeigt besonders übersichtlich das Prinzip der Erfindung zur exakten Positionierung des zweiten Kupplungsteils 140 relativ zum ersten Kupplungsteil 109 in axialer Richtung oder z-Richtung sowie in Umfangsrichtung bzw. zur z-Richtung senkrechten x-y-Ebene. Die Ausrichtung ist außerordentlich präzise und von sehr hoher Repetiergenauigkeit, d.h. beim mehrhundertfachen Zusammenspannen und Lösen der beiden Kupplungsteile liegen die Abweichungen in der Positioniergenauigkeit im Bereich von wenigen Mikrometern.

Das erste Kupplungsteil 109 kann wie bei den vorstehend erläuterten Ausführungsbeispielen mit seiner Oberseite 110 an der Unterseite eines hier nicht dargestellten Kupplungsträgers befestigt sein, und das zweite Kupplungsteil 140 kann an seiner in Figuren 7 und 8 nicht zur erkennenden Unterseite mit einer Elektrode verbunden sein.

Das erste Kupplungsteil 109 ist im wesentlichen von zylindrischer Gestalt und weist drei von seiner Mantelfläche nach radial einwärts sich erstreckende Einschnitte auf, so daß zwischen je zwei Einschnitten in Umfangsrichtung um die Breite der Einschnitte beabstandet Anlageelemente 101, 102, 103 gebildet sind. Jedes der Anlageelemente 101, 102, 103 besitzt je eine Anlagefläche, von denen in den Figuren 7 und 8 nur die Anlagefläche des Anlageelements 101 zu erkennen ist und mit 104 bezeichnet ist. Bei Draufsicht auf das erste Kupplungsteil 109 sind die Anlageflächen in Uhrzeigerrichtung die jeweils hintere ein Anlageelement begrenzende Fläche. Alle Anlageflächen erstrecken sich parallel zur Mittelachse des ersten Kupplungsteils 109. Da die Einschnitte in Umfangsrichtung gleich beabstandet sind, in Draufsicht gleiche symmetrische, nämlich rechtwinklige Form besitzen und jeder Einschnitt symmetrisch zur Mittelachse des ersten Kupplungsseils 109 liegt, sind die Anlageflächen ebenfalls in Umfangsrichtung gleich beabstandet und haben gleichen Abstand zur Mittelachse. Jede Anlagefläche ist als Referenzfläche zur Ausrichtung des zweiten Kupplungsteils 140 relativ zum ersten Kupplungsteil 109 in Umfangsrichtung ausgebildet.

Das zweite Kupplungsteil 140 hat im dargestellten Ausführungsbeispiel zylindrische Form und gleichen Durchmesser wie das erste Kupplungsteil 109. Aus der Oberseite 130 des zweiten Kupplungsteils 140 erheben sich drei in Umfangsrichtung gleich beabstandete nockenförmige Gegenelemente 141, 142, 143, die gleiche geometrische Form haben und von denen jedes eine in Umfangsrichtung genommene Breite hat, die kleiner ist als die Breite eines Einschnittes im ersten Kupplungsteil 109 sowie eine sich über die Oberseite 130 erhebende Höhe besitzt, die kleiner ist als die axiale Stärke des ersten Kupplungsteils 109. Jedes der Gegenelemente 141, 142, 143 besitzt eine in Gegenrichtung des Uhrzeigers hintere Gegenfläche, die, soweit in den Figuren 7 und 8 erkennbar, für das Gegenelement 141 mit 144 und für das Gegenelement 142 mit 145 bezeichnet ist. Wie insbesondere aus Figur 7 zu erkennen ist, ist jede Gegenfläche konkav gebogen, insbesondere schwach ballig ausgeführt und dazu bestimmt, beim Zusammenspannen der Kupplungsteile 109 und 140 und gegeneinander Verdrehen derselben um die gemeinsame Achse gegen die Anlageflächen der Anlageelemente 101, 102, 103 anzuliegen.

Aus der Oberseite 130 des zweiten Kupplungszeils 140 sind drei erhabene, hier kreisförmige Flächenstücke 146, 147, 148 ausgebildet, die umfangsmäßig gleich beabstandet sind und wobei zwischen je zwei Gegenelementen je ein Flächenstück angeordnet ist. Die Flächenstücke 146, 147, 148 sind als Referenzflächen ausgebildet und erstrecken sich exakt quer zur Mittelachse des zweiten Kupplungsteils 140. Die Höhe jedes Flächenstücks 146, 147, 148, mit der es sich über die Oberseite 130 erhebt, ist wesentlich kleiner als die Höhe der Gegenelemente.

Die nicht dargestellte Unterseite des ersten Kupplungsteils 109 ist ebenfalls als Referenzfläche ausgebildet, die sich exakt quer zur Mittelachse des ersten Kupplungsteils 109 erstreckt.

Für die Mittel zum Zusammenspannen der beiden Kupplungsteile 109, 142 gibt es verschiedene Möglichkeiten. Die Mittel müssen geeignet sein, die Kupplungsteile 109, 142 in axialer Richtung so zur Anlage aufeinander zu bringen, daß die Referenzflächen in z-Richtung, also die Unterseite des ersten Kupplungsteils 109, auf die Referenzflächen in z-Richtung am zweiten Kupplungsteil, also die Flächenstücke 146, 147, 148 zur Anlage gelangen, und müssen ferner geeignet sein, das erste Kupplungsteil 109 relativ zum zweiten Kupplungsteil 140 in Uhrzeigerrichtung gemäß Pfeil 112 in Figur 8 und/oder das zweite Kupplungsteil 140 relativ zum ersten Kupplungsteil 109 in Gegenuhrzeigerrichtung gemäß Pfeil 114 in Figur 8 zu verdrehen. Bei dieser Drehung kommen die Gegenflächen der Gegenelemente 141, 142, 143 zur Anlage an die Anlageflächen der Anlageelemente 101, 102, 103.

Die genannten Mittel können beispielsweise einen Zugbolzen der in dem Dokument EP-A-255 042 beschriebenen Art aufweisen, dessen Fuß in einem zentralen Blindloch 149 im zweiten Kupplungsteil 140 verankerbar ist, und der sich durch die Zentralbohrung 108 im ersten Kupplungsteil hindurch in eine im Bearbeitungskopf einer Werkzeugmaschine vorgesehenen Aufnahme erstreckt, welche den Kopf des Zugbolzens ergreift und in Z-Richtung einwärts zieht, so daß das zweite Kupplungsteil 140 (mit eventuell verbundener Elektrode oder dergleichen Werkzeug) in Z-Richtung gegen das erste Kupplungsteil 109 bis zur Anlage der Z-Referenzflächen gezogen wird. In dem Bearbeitungskopf der Werkzeugmaschine kann ein beispielsweise druckluftbetätigtes Andruckelement in Form eines Stößels vorgesehen sein, der gegen eine sich achsparallel erstreckende außermittige Schulter am Zugbolzen einwirkt und diesen im Sinne des Pfeils 114 relativ zum ersten Kupplungsteil 109 bis zur Anlage der Gegenflächen gegen die Anlageflächen verdreht. Nach Wegnahme der Druckluftbeaufschlagung der Haltemittel für den Zugbolzen sowie für das Andruckelement kann das zweite Kupplungsteil 140 ohne weiteres vom ersten Kupplungsteil 109 (und damit von der Werkzeugmaschine) abgezogen werden.

Eine andere, vereinfachte und mehr systematische Möglichkeit des Zusammenspannens ist durch den in den Fig. 7 und 8 dargestellten Schraubbolzen 120 gegeben, dessen Schaft 122 sich durch die Bohrung 108 erstreckt und dessen Gewindeabschnitt in ein Innengewinde der Bohrung 149 eingreift. Der Bolzenkopf 124 liegt auf der Oberseite 103 des ersten Kupplungsteils 109 auf. Durch Einschrauben des Bolzens 120 in die Öffnung 149 werden die beiden Kupplungsteile 109 und 140 in axialer Richtung verspannt, wobei die Drehung des Bolzenskopfes 124 das erste Kupplungsteil 109 in Richtung des Pfeils 112 mitnimmt, bis die Referenzflächen für die umfangsmäßige Ausrichtung und die Referenzflächen in Z-Richtung zur Anlage gelangen.

## Patentansprüche

1. Spannvorrichtung bestehend aus zwei Kupplungsteilen (9, 40; 60, 80; 109, 140) und Spannmitteln zum lösbaren axialen Zusammenspannen der beiden Kupplungsteile, von denen eines (9; 60; 109) mehrere Anlageelemente (12, 16, 20; 62, 66, 70; 101, 102, 103) und das andere Kupplungsteil (40; 80; 140) mehrere Gegenelemente (42, 44, 46; 82, 84 86; 141, 142, 143) aufweist, wobei beim Zusammenspannen die Anlageelemente zur eindeutigen Positionierung in Umfangsrichtung zur Anlage an die Gegenelemente gelangen, und wobei die Kupplungsteile zusammenwirkende, sich quer zur Spannrichtung (24) erstreckende Referenzflächen (19, 21, 23, 54, 56, 58; 61, 63, 65, 81, 83, 85; 146, 147, 148) zur axialen Positionierung aufweisen, **dadurch gekennzeichnet, daß** die Anlageelemente oder die Gegenelemente beim Zusammenspannen mit eine in Umfangsrichtung (112, 114) wirkende Kraft entwickelnden Mitteln gekoppelt sind.

2. Vorrichtung nach Anspruch 1, **dadurch gekennzeichnet, daß** bei jedem Anlageelement (12, 16, 20; 62, 66, 70) die dem jeweils zugehörigen Gegenelement benachbarte Anlagefläche schwach ballig ausgeführt ist.

3. Vorrichtung nach Anspruch 1, **dadurch gekennzeichnet, daß** bei jedem Gegenelement (42, 44, 46; 82, 84, 86) die dem jeweils zugehörigen Anlageelement (12, 16, 20; 62, 66, 70) benachbarte Gegenfläche schwach ballig ausgeführt ist.

4. Vorrichtung nach einem der vorstehenden Ansprüche, **dadurch gekennzeichnet, daß** an dem die Anlageelemente tragenden Kupplungsteil (1; 60) wenigstens ein Andruckelement ausgebildet ist, das beim Zusammenspannen das andere Kupplungsteil (40; 80) mit der Kraft beaufschlagt.

5. Vorrichtung nach einem der vorstehenden Ansprüche, **gekennzeichnet durch** Andruckelemente (10, 14, 18; 64, 68, 72), von denen beim Zusammenspannen je eines je ein Gegenelement (42, 44, 46; 82, 84, 86) gegen ein Anlageelement (12, 16, 20; 62, 66, 70) beaufschlagt.

6. Vorrichtung nach Anspruch 5, **dadurch gekennzeichnet, daß** die Andruckelemente (10, 14, 18; 64, 68, 72) elastisch sind.

7. Vorrichtung nach Anspruch 5 oder 6, **dadurch gekennzeichnet, daß** die Gegenelemente als sich axial erhebende und von der Peripherie des zweiten Kupplungsteils (40, 80) nach innen erstreckende Leisten (42, 44, 46; 82, 84, 86) ausgebildet sind, wobei jede Leiste zweckmäßig wenigstens eine Keilfläche aufweist.

8. Vorrichtung nach Anspruch 7, **dadurch gekennzeichnet, daß** sich die Leisten (42, 44, 46) radial erstrecken.

9. Vorrichtung nach einem oder mehreren der vorstehenden Ansprüche, **dadurch gekennzeichnet, daß** die Anlageelemente freie feste Kanten (12, 16, 20; 62, 66, 70) sind.

10. Vorrichtung nach einem oder mehreren der vorstehenden Ansprüche, **dadurch gekennzeichnet, daß** an dem die Anlageelemente tragenden Kupplungsteil (1; 60) in Umfangsrichtung neben jedem Anlageelement (12, 16, 20; 62, 66, 72) je eine axialelastische Lippe (10, 14, 18; 64, 68, 70) derart ausgebildet ist, daß beim Zusammenspannen je ein Gegenelement in einen zwischen der Lippe und dem benachbarten Anlageelement verbleibenden Schlitz eindringt.

11. Vorrichtung nach einem oder mehreren der vorstehenden Ansprüche, **dadurch gekennzeichnet, daß** jedes Gegenelement zwei gegenüberliegende radiusparallele Keilflächen besitzt und jedes Anlageelement sowie jede Lippe je eine radiusparallele Kante aufweisen.

12. Vorrichtung nach einem oder mehreren der vorstehenden Ansprüche, **dadurch gekennzeichnet, daß** die Referenzflächen auf Sätteln ausgebildet sind, die sich aus wenigstens einem der Kupplungsteile axial um eine Höhe erheben, die kleiner als die Höhe der Leisten ist.

13. Vorrichtung nach einem oder mehreren der vorstehenden Ansprüche, **dadurch gekennzeichnet, daß** das das die Anlageelemente aufweisende Kupplungsteil (1; 60) an einer Werkzeugmaschine befestigt ist.

14. Vorrichtung nach einem oder mehreren der vorstehenden Ansprüche, **dadurch gekennzeichnet, daß** die Anlageelemente und Gegenelemente in Umfangsrichtung gleich beabstandet sind.

15. Vorrichtung nach einem oder mehreren der vorstehenden Ansprüche, **dadurch gekennzeichnet, daß** zwischen je zwei Anlageelementen und je zwei Gegenelementen in Umfangsrichtung jeweils eine Referenzfläche vorgesehen ist.

16. Vorrichtung nach einem oder mehreren der vorstehenden Ansprüche, **dadurch gekennzeichnet, daß** das eine Kupplungsteil (1; 60) drei Anlageelemente und das andere Kupplungsteil (40; 80) drei Gegenelemente aufweisen.

17. Vorrichtung nach einem oder mehreren der vorstehenden Ansprüche, **dadurch gekennzeichnet, daß** die Lippen bogenförmig ausgebildet sind.

18. Vorrichtung nach einem oder mehreren der vorstehenden Ansprüche, **dadurch gekennzeichnet, daß** die Lippen und die Anlageelemente in einer gemeinsamen Ebene liegen.

19. Vorrichtung nach einem oder mehreren dervorstehenden Ansprüche, **dadurch gekennzeichnet, daß** das die Gegenelemente aufweisende Kupplungsteil (40) einen zentralen Ring (50) von kegelstumpfförmigem Querschnitt als Einführhilfe beim Zusammenspannen aufweist und das andere Kupplungsteil (1) eine entsprechende mittige Einsenkung (22) besitzt.

20. Vorrichtung nach einem oder mehreren dervorstehenden Ansprüche, **dadurch gekennzeichnet, daß** das an der Werkzeugmaschine befestigbare Kupplungsteil (1; 60) an der den Anlageelementen gegenüberliegenden Seite (2) mit axialelastischen Elementen (3, 4; 7, 8) versehen ist, die bei seiner lösbaren Befestigung an der Werkzeugmaschine mit an dieser vorgesehenen Leisten zusammenwirken.

21. Vorrichtung nach einem oder mehreren der vorstehenden Ansprüche, **dadurch gekennzeichnet, daß** das mit der Werkzeugmaschine befestibare Kupplungsteil (1; 60) an derjenigen seiner Seiten, an der die Anlageelemente ausgebildet sind, eine wesentlich kleinere radiale Ausdehnung hat als an der gegenüberliegenden Seite (2).

## Claims

1. A clamping apparatus comprising two coupling members (9, 40; 60, 80; 109, 140) and clamping means for releasably axially clamping together the two coupling members, of which one (9; 60; 109) has a plurality of contact elements (12, 16, 20; 62, 66, 70; 101, 102, 103) and the other coupling member (40; 80; 140) has a plurality of counterpart elements (42, 44, 46; 82, 84, 86; 141, 142, 143), wherein upon being clamped together the contact elements move for defined positioning in the peripheral direction to bear against the counterpart elements, and wherein the coupling members have co-operating reference faces (19, 21, 23, 54, 56, 58; 61, 63, 65, 81, 83, 85; 146, 147, 148) extending transversely with respect to the clamping direction (25), for axial positioning, **characterised in that** upon being clamped together the contact elements or the counterpart elements are coupled with means developing a force acting in the peripheral direction (112, 114).

2. Apparatus according to claim 1 **characterised in that** in each contact element (12, 16, 10; 62, 66, 70) the contact face adjacent to the respectively associated counterpart element is of a slightly crowned configuration.

3. Apparatus according to claim 1 **characterised in that** in each counterpart element (42, 44, 46; 82, 84, 86) the counterpart face adjacent to the respectively associated contact element (12, 16, 20; 62, 66, 70) is of a slightly crowned configuration.

4. Apparatus according to one of the preceding claims **characterised in that** provided on the coupling member (1; 60) carrying the contact elements is at least one pressure-applying element which upon being clamped together acts on the other coupling member (40; 80) with the force.

5. Apparatus according to one of the preceding claims **characterised by** pressure-applying elements (10, 14, 18; 64, 68, 72) of which, upon being clamped together, a respective one urges a counterpart element (42, 44, 46; 82, 84, 86) against a contact element (12, 16, 20; 62, 66, 70).

6. Apparatus according to claim 5 **characterised in that** the pressure-applying elements (10, 14, 18; 64, 68, 72) are elastic.

7. Apparatus according to claim 5 or claim 6 **characterised in that** the counterpart elements are in the form of axially rising bars (42, 44, 46; 82, 84, 86) extending inwardly from the periphery of the second coupling member (40, 80), wherein each bar desirably has at least one wedge face.

8. Apparatus according to claim 7 **characterised in that** the bars (42, 44, 46) extend radially.

9. Apparatus according to one or more of the preceding claims **characterised in that** the contact elements are free fixed edges (12, 16, 20; 62, 66, 70).

10. Apparatus according to one or more of the preceding claims **characterised in that** a respective axially elastic lip (10, 14, 18; 64, 68, 70) is provided on the coupling member (1; 60) carrying the contact elements in the peripheral direction beside each contact element (12, 16, 20; 62, 66, 72), in such a way that upon being clamped together a respective counterpart element penetrates into a slot remaining between the lip and the adjacent contact element.

11. Apparatus according to one or more of the preceding claims **characterised in that** each counterpart element has two mutually oppositely disposed wedge faces in parallel relationship with a radius and each contact element and each lip each have an edge in parallel relationship with a radius.

12. Apparatus according to one or more of the preceding claims **characterised in that** the reference faces are provided on saddles which rise axially out of at least one of the coupling members by a height which is less than the height of the bars.

13. Apparatus according to one or more of the preceding claims **characterised in that** the coupling member (1; 60) having the contact elements is fixed to a machine tool.

14. Apparatus according to one or more of the preceding claims **characterised in that** the contact elements and the counterpart elements are equally spaced in the peripheral direction.

15. Apparatus according to one or more of the preceding claims **characterised in that** a respective reference face is provided between each two contact elements and each two counterpart elements in the peripheral direction.

16. Apparatus according to one or more of the preceding claims **characterised in that** the one coupling member (1; 60) has three contact elements and the other coupling member (40; 80) has three counterpart elements.

17. Apparatus according to one or more of the preceding claims **characterised in that** the lips are of an arcuate configuration.

18. Apparatus according to one or more of the preceding claims **characterised in that** the lips and the contact elements are in a common plane.

19. Apparatus according to one or more of the preceding claims **characterised in that** the coupling member (40) having the counterpart elements has a central ring (50) of frustoconical cross-section as an insertion aid when the apparatus is clamped together and the other coupling member (1) has a corresponding central recess (22).

20. Apparatus according to one or more of the preceding claims **characterised in that** the coupling member (1; 60) which can be fixed to the machine tool is provided at the side (2) in opposite relationship to the contact elements with axially elastic elements (3, 4; 7, 8) which upon releasable fixing thereof to the machine tool co-operate with bars provided thereon.

21. Apparatus according to one or more of the preceding claims **characterised in that** at that one of its sides at which the contact elements are provided the coupling member (1; 60) which can be fixed to the machine tool is of a substantially smaller radial extent than at the opposite side (2).

## Revendications

1. Dispositif de fixation constitué de deux pièces d'accouplement (9, 40 ; 60, 80 ; 109, 140) et de moyens de serrage pour le serrage axial amovible des deux pièces d'accouplement ensemble, l'une des pièces d'accouplement (9 ; 60 ; 109) comportant plusieurs éléments d'appui (12, 16, 20 ; 62, 66, 70 ; 101, 102, 103) et l'autre pièce d'accouplement (40 ; 80 ; 140) comportant plusieurs éléments complémentaires (42, 44, 46 ; 82, 84, 86 ; 141, 142, 143), dans lequel, lors du serrage, les éléments d'appui arrivent, pour le positionnement unique en direction circonférentielle, à s'appuyer contre les éléments complémentaires et dans lequel les pièces d'accouplement comportent, pour le positionnement axial, des surfaces de référence (19, 21, 23, 54, 56, 58 ; 61, 63, 65, 81, 83, 85 ; 146, 147, 148) qui coopèrent et qui s'étendent transversalement par rapport à la direction de serrage (24), **caractérisé en ce que** les éléments d'appui ou les éléments complémentaires sont couplés lors du serrage par des moyens développant une force agissant en direction circonférentielle (112, 114).

2. Dispositif selon la revendication 1, **caractérisé en ce que**, pour chaque élément d'appui (12, 16, 20 ; 62, 66, 70), la surface d'appui voisine de l'élément complémentaire respectivement associé est conçue légèrement bombée.

3. Dispositif selon la revendication 1, **caractérisé en ce que**, pour chaque élément complémentaire (42, 44, 46 ; 82, 84, 86), la surface complémentaire voisine de l'élément d'appui (12, 16, 20 ; 62, 66, 70) respectivement associé est conçue légèrement bombée.

4. Dispositif selon l'une quelconque des revendications précédentes, **caractérisé en ce que**, sur la pièce d'accouplement (1 ; 60) portant les éléments d'appui, il est conçu au moins un élément de pression qui soumet à la force l'autre pièce d'accouplement (40 ; 80) lors du serrage.

5. Dispositif selon l'une quelconque des revendications précédentes, **caractérisé par** des éléments de pression (10, 14, 18 ; 64, 68, 72) parmi lesquels, lors du serrage, chacun d'eux pousse un élément complémentaire (42, 44, 46 ; 82, 84, 86) contre un élément d'appui correspondant (12, 16, 20 ; 62, 66, 70).

6. Dispositif selon la revendication 5, **caractérisé en ce que** les éléments de pression (10, 14, 18 ; 64, 68, 72) sont élastiques.

7. Dispositif selon la revendication 5 ou 6, **caractérisé en ce que** les éléments complémentaires sont conçus comme des barres (42, 44, 46 ; 82, 84, 86) qui s'élèvent axialement et qui s'étendent de la périphérie de la deuxième pièce d'accouplement (40, 80) vers l'intérieur, chaque barre comportant judicieusement au moins une surface en coin.

8. Dispositif selon la revendication 7, **caractérisé en ce que** les barres (42, 44, 46) s'étendent radialement.

9. Dispositif selon une ou plusieurs des revendications précédentes, **caractérisé en ce que** les éléments d'appui sont des arêtes fixes libres (12, 16, 20 ; 62, 66, 70).

10. Dispositif selon une ou plusieurs des revendications précédentes, **caractérisé en ce que**, sur la pièce d'accouplement (1 ; 60) portant les éléments d'appui, il est conçu, dans la direction circonférentielle à côté de chaque élément d'appui (12, 16, 20 ; 62, 66, 72) respectivement une lèvre élastique axialement (10, 14, 18 ; 64, 68, 70) de telle sorte que, lors du serrage, chaque élément complémentaire pénètre respectivement dans une fente restant entre la lèvre et l'élément d'appui voisin.

11. Dispositif selon une ou plusieurs des revendications précédentes, **caractérisé en ce que** chaque élément complémentaire comporte deux surfaces en coin opposées et parallèles au rayon et chaque élément d'appui ainsi que chaque lèvre comportent respectivement une arête parallèle au rayon.

12. Dispositif selon une ou plusieurs des revendications précédentes, **caractérisé en ce que** les surfaces de référence sont conçues sur des supports qui, à partir d'au moins l'une des pièces d'accouplement, s'élèvent axialement d'une hauteur qui est inférieure à la hauteur des barres.

13. Dispositif selon une ou plusieurs des revendications précédentes, **caractérisé en ce que** la pièce d'accouplement (1 ; 60) comportant les éléments d'appui est fixée à une machine-outil.

14. Dispositif selon une ou plusieurs des revendications précédentes, **caractérisé en ce que** les éléments d'appui et les éléments complémentaires sont équidistants en direction circonférentielle.

15. Dispositif selon une ou plusieurs des revendications précédentes, **caractérisé en ce qu'**il est prévu en direction circonférentielle une surface de référence à chaque fois entre deux éléments d'appui et deux éléments complémentaires.

16. Dispositif selon une ou plusieurs des revendications précédentes, **caractérisé en ce qu'**une pièce d'accouplement (1 ; 60) comporte trois éléments d'appui et l'autre pièce d'accouplement (40 ; 80) comporte trois éléments complémentaires.

17. Dispositif selon une ou plusieurs des revendications précédentes, **caractérisé en ce que** les lèvres sont conçues arquées.

18. Dispositif selon une ou plusieurs des revendications précédentes, **caractérisé en ce que** les lèvres et les éléments d'appui se trouvent dans un même plan.

19. Dispositif selon une ou plusieurs des revendications précédentes, **caractérisé en ce que** la pièce d'accouplement (40) comportant les éléments complémentaires a un anneau central (50) de section en forme de cône tronqué comme aide à l'introduction lors du serrage et l'autre pièce d'accouplement (1) a un creux central (22) correspondant.

20. Dispositif selon une ou plusieurs des revendications précédentes, **caractérisé en ce que** la pièce d'accouplement (1 ; 60) pouvant être fixée à la machine-outil est munie, sur le côté (2) opposé aux éléments d'appui, d'éléments élastiques axialement (3, 4 ; 7, 8) qui coopèrent, lors de sa fixation amovible sur la machine-outil, avec des barres prévues sur celle-ci.

21. Dispositif selon une ou plusieurs des revendications précédentes, **caractérisé en ce que** la pièce d'accouplement (1 ; 60) pouvant être fixée à la machine-outil a, au niveau de celui de ses côtés sur lequel les éléments d'appui sont conçus, une dimension radiale nettement plus petite qu'au niveau du côté opposé (2).
